Europäisches Patentamt

European Patent Office

Office européen des brevets

(19)

(11) Veröffentlichungsnummer: **0 377 600 B1**

(12) EUROPÄISCHE PATENTSCHRIFT

(45) Veröffentlichungstag der Patentschrift: **18.11.93**

(51) Int. Cl.5: **G01N 27/416**, F02D 41/00

(21) Anmeldenummer: **88907118.9**

(22) Anmeldetag: **18.08.88**

(86) Internationale Anmeldenummer:
**PCT/DE88/00504**

(87) Internationale Veröffentlichungsnummer:
**WO 89/01623 (23.02.89 89/05)**

(54) **VERFAHREN, ANWENDUNG DESSELBEN UND VORRICHTUNG ZUR LAMBDAWERTERFASSUNG.**

(30) Priorität: **19.08.87 DE 3727573**

(43) Veröffentlichungstag der Anmeldung:
**18.07.90 Patentblatt 90/29**

(45) Bekanntmachung des Hinweises auf die
Patenterteilung:
**18.11.93 Patentblatt 93/46**

(84) Benannte Vertragsstaaten:
**DE GB**

(56) Entgegenhaltungen:
**EP-A- 0 152 293
EP-A- 0 258 543
DE-A- 3 533 197**

**Patent Abstracts of Japan, vol. 8, no. 23,
(P-251)(1460), 31 January 1984, & JP, A,
58179349**

**Patent Abstracts of Japan, vol. 10, no. 60
(P-435)(2117) 11 March 1986, & JP, A,
60203846**

Patent Abstracts of Japan, vol. 7, no. 90,
(P-191)(1235), 14 April 1983, & JP, A, 5817351

(73) Patentinhaber: **ROBERT BOSCH GMBH
Postfach 30 02 20
D-70442 Stuttgart(DE)**

(72) Erfinder: **RAFF, Lothar
Wunnensteinstr. 24
D-7148 Remseck 3(DE)**
Erfinder: **SCHNAIBEL, Eberhard
Hochstetterstr. 1/5
D-7254 Hemmingen(DE)**
Erfinder: **WESTERDORF, Michael
Hohenstaufenstr. 38
D-7141 Möglingen(DE)**

EP 0 377 600 B1

## Beschreibung

Die Erfindung betrifft ein Verfahren zum Erfassen des Lambdawertes, wie er von einer Lambdasonde geliefert wird, die zum Beispiel im Abgasstrom einer Brennkraftmaschine angeordnet ist. Die Erfindung betrifft weiterhin Anwendungen eines solchen Verfahrens und eine Vorrichtung zum Durchführen des Verfahrens.

Stand der Technik

Der Wert der von einer Lambdasonde gelieferten Spannung hängt nicht nur vom Lambdawert am Ort der Sonde, sondern auch von deren Temperatur ab. Besonders stark ist die Abhängigkeit im Fettast. Durch den Temperaturgang werden die Meßergebnisse so stark verfälscht, daß unterhalb einer gewissen Temperatur die von der Sonde gelieferten Spannungen gar nicht zum Regeln ausgenutzt werden. Um die Einschaltschwelle zu erkennen, ab der die Werte genutzt werden, wird z. B. der Innenwiderstand der Sonde gemessen, der mit zunehmender Temperatur abnimmt.

Ein Verfahren zur Innenwiderstandsmessung ist in der nach dem Prioritätstag der vorliegenden Anmeldung veröffentlichten Patentanmeldeschrift EP 0 258 543 A2 beschrieben. Die Sondenspannung wird einmal im unbelasteten Zustand und dann unter Belastung durch einen Lastwiderstand mit vorgegebenem Widerstandswert gemessen. Aus den beiden Spannungen und dem bekannten Widerstandswert wird der aktuelle Innenwiderstand berechnet. Dieser wird mit einem Schwellwert verglichen, und dann, wenn der aktuelle Wert unter dem Schwellwert liegt, werden die Spannungswerte zur Lambdaregelung verwendet.

Ein einfacheres Verfahren, bei dem die Temperaturabhängigkeit des Innenwiderstandes ausgenutzt wird, das es jedoch nicht erforderlich macht, den Innenwiderstand konkret auszurechnen, ist aus DE 33 19 432 A1 (US 4.528.957) bekannt. Das bekannte Verfahren nutzt die Tatsache, daß sich die an einem mit der Sonde in Reihe liegenden Lastwiderstand abgegriffene Spannung nicht nur dann ändert, wenn sich die Sondenspannung aufgrund von Lambdawertschwankungen ändert, sondern daß dies auch dann der Fall ist, wenn sich der Innenwiderstand ändert. Es ist daher gar nicht erforderlich, mit Hilfe des Lastwiderstandes den Innenwiderstand auszurechnen, sondern es reicht aus, die am Lastwiderstand abgegriffene Spannung mit einem Spannungsschwellwert zu vergleichen, um die Sondenbereitschaft zu erkennen. Tatsächlich sind zwei Schwellen erforderlich, da bei gleichem Innenwiderstand zwei unterschiedliche Spannungen geliefert werden können, abhängig davon, ob der Sonde gerade Abgas zugeführt wird, das von fettem oder magerem Gemisch herrührt.

Bei den genannten Verfahren zur Sondenbereitschaftserkennung sind die Schwellwerte so gelegt, daß Regelbereitschaft der Sonde erst dann erkannt wird, wenn sich der Innenwiderstand nur noch wenig ändert und demgemäß das Meßergebnis kaum mehr verfälscht.

Aus der DE OS 35 33 197 ist eine technische Lehre bekannt, die den Einfluß der Sondentemperatur auf die Bestimmung des Lambdawerts nennt und einen Vorschlag zur Kompensation dieses Einflusses liefert. Danach soll zunächst der Innenwiderstand der Lambdasonde als Maß für ihre Temperatur erfaßt werden. Durch taktweises Belasten der Lambdasonde mit einem Lastwiderstand und Messung der sich einstellenden Lambdasondenspannung jeweils im belasteten und im unbelasteten Zustand ergeben sich Meßwerte, aus denen in Verbindung mit weiteren bekannten Werten (Lastwiderstand) der Innenwiderstand der Lambdasonde ermittelt wird. Unter Verwendung eines Kennfeldes wird ein Temperatur-korrigierter Lambdawert gewonnen und zur Regelung benutzt.

Der Erfindung liegt die Aufgabe zugrunde, ein Verfahren zur Lambdawerterfassung anzugeben, das bereits bei tieferen Temperaturen als bisher zuverlässig arbeitet. Der Erfindung liegt weiterhin die Aufgabe zugrunde, Anwendungen für dieses Verfahren anzugeben. Letztlich liegt der Erfindung die Aufgabe zugrunde, eine Vorrichtung zur Durchführung eines solchen Verfahrens zu nennen.

Vorteile der Erfindung

Die Erfindung ist für das Verfahren durch die Merkmale von Anspruch 1, für Anwendungen durch die Merkmale der Ansprüche 5 oder 6 und für die Vorrichtung durch die Merkmale von Anspruch 7 gegeben. Vorteilhafte Weiterbildungen und Ausgestaltungen des Verfahrens sind Gegenstand der Unteransprüche 2 - 4.

Das erfindungsgemäße Verfahren liefert bei der Anwendung zur Lambdaregelung bessere Regelungsergebnisse und bei der Anwendung in einem Meßgerät zuverlässigere Meßergebnisse als bisherige Verfahren. Um dies zu ermöglichen, sieht das erfindungsgemäße Verfahren zur Lambdawerterfassung vor, daß die Belastung durch einen Lastwiderstand mit Widerständen unterschiedlicher Widerstandswerte erfolgt, abhängig vom jeweils vorliegenden Innenwiderstand der Sonde, also abhängig vom jeweils vorliegenden Temperaturbereich. Der Wert des Lastwiderstandes wird jeweils so gewählt, daß die Sonde nicht übermäßig belastet wird, damit sie keinen Schaden nimmt. Insbesondere für den Anwendungsfall der Regelung ist eine Weiterbildung von Bedeutung, die vorsieht, daß der Wert des Lastwiderstandes so gewählt wird, daß sich die Spannung der wieder unbelasteten Sonde bis zum nächsten Abtasten weitgehend erholt.

Das erfindungsgemäße Verfahren ist im gesamten Arbeitsbereich einer Sonde, also vom Mageren bis ins Fette anwendbar. Da jedoch die Temperaturabhängigkeit im mageren Bereich und im Bereich um Lambda = 1 relativ gering ist, sieht eine vorteilhafte Weiterbildung der Anwendungen vor, daß in diesen Bereichen das Umrechnen von Spannungswerten auf Lambdawerte linear ohne Berücksichtigen einer Temperaturabhängigkeit erfolgt.

Die erfindungsgemäße Vorrichtung zur Lambdawerterfassung weist ein Mittel zum Erfassung der Spannung der unbelasteten Sonde, ein Mittel zum Bestimmen des Innenwiderstandes der Sonde und außerdem ein Kennfeld auf, zum Auslesen eines zu den gemessenen Spannungswerten gehörigen Lambdawertes.

Zeichnung

Die Erfindung wird im folgenden anhand von durch Figuren veranschaulichten Ausführungsbeispielen näher erläutert. Es zeigen:

Fig. 1 ein Blockschaltbild einer Vorrichtung entsprechend dem stand der Technik

Fig. 2 ein Kennfeld in schematischer Darstellung für den gesamten Lambdabereich wie es im Prinzip ebenfalls aus dem stand der Technik bekannt ist

Fig. 3 und 4 jeweils ein Kennfeld für den fetten Bereich, und zwar für den Bereich relativ niedriger bzw. für den Bereich relativ hoher Sondentemperaturen wie sie bei der erfindungsgemäßen Vorrichtung nach Fig.6 verwendet werden;

Fig. 5 ein Diagramm zum Erläutern unterschiedlicher Erfassungsbereiche für Lambdawerte; und

Fig. 6 ein Blochschaltbild einer erfindungsgemäßen Vorrichtung, in der eine Lambdawerterfassung unter Berücksichtigung des Innenwiderstandes der Lambdasonde eine Rolle spielt.

Darstellung des Stands der Technik und der Ausführungsbeispiele

Das vorgeschlagene Verfahren, dessen Anwendungen und die Vorrichtung zur Durchführung desselben machen den stark temperaturabhängigen Fettast und den weniger stark temperaturabhängigen Magerast von Lambdasonden, insbesondere solchen vom Nernst-Typ (ohne und mit Beheizung), mit geringem Aufwand nutzbar. Dem liegt zugrunde, daß ein eindeutig reproduzierbarer Zusammenhang zwischen der Sondenspannung $U_S$, der Sondentemperatur $T_S$ und Lambda besteht. Eine Lambdabestimmung ist demnach aus $U_S$ und $T_S$ möglich dadurch, daß aus einem über diesen Größen aufgespannten Kennfeld der entsprechenden Lambdasonde der Lambda-Wert im jeweiligen Betriebspunkt interpoliert wird. Da der Innenwiderstand $R_i$ der Sauerstoffsonde wiederum eine Funktion der Temperatur $T_S$ derselben ist, ist es auch möglich, ersatzhalber ein über $U_S$ und $R_i$ der Sauerstoffsonde aufgespanntes Kennfeld zum Bestimmen des Lambda-Wertes heranzuziehen. Das Verfahren sieht vor, daß in einem ersten Schritt die Sondenspannung $U_S$ unter vernachlässigbarer Last als Leerlaufspannung bestimmt wird, und daß in einem zweiten Schritt die Sondenspannung $U_L$ der mit einem Meßwiderstand $R_L$ belasteten Sauerstoffsonde gemessen wird und daraus mittels einer einfachen Rechenroutine der Innenwiderstand $R_i$ ermittelt wird.

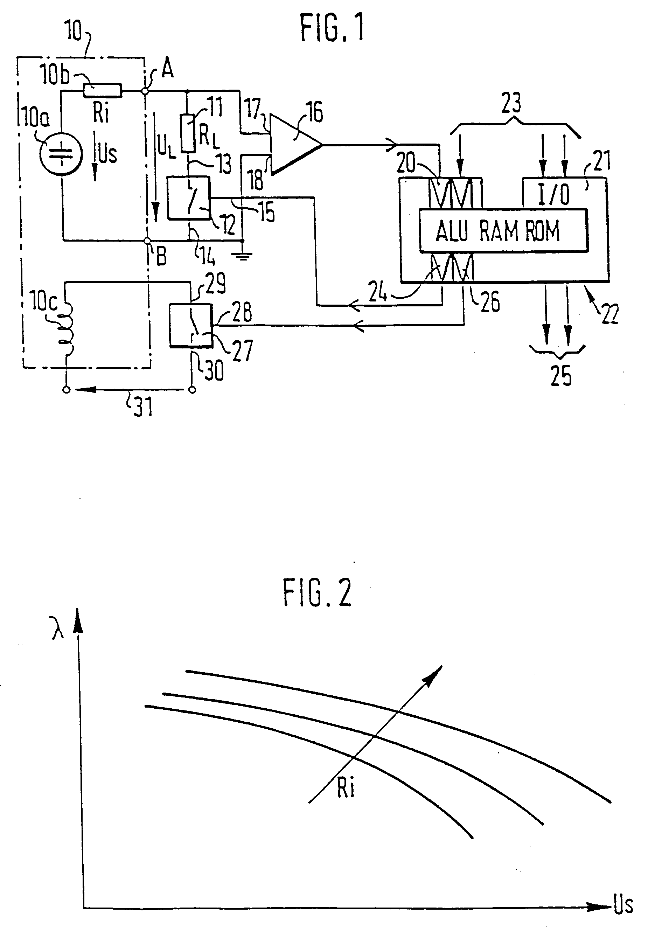

Anhand des Blockschaltbildes von Fig. 1 werden nun eine in den Grundzügen bekannte Vorrichtung und das mit ihr durchführbare Verfahren näher erläutert. Mit 10 ist die Lambdasonde gekennzeichnet, die die Sondenurspannungsquelle ($U_S$) 10a, den temperaturabhängigen Innenwiderstand ($R_i$) 10b derselben sowie - falls die Lambdasonde beheizt werden soll - ein elektrisches Heizelement 10c umfaßt, mit dem die Sonde bei Bedarf auf eine übliche Betriebstemperatur von 600 °C - 800 °C hochgeheizt werden kann. Die Ausgangsklemmen A und B der Sonde sind an die beiden Eingänge 17 und 18 eines Differenzverstärkers 16 mit sehr hohem Innenwiderstand geführt. Eine der beiden Eingangsklemmen dieses Verstärkers, hier die Klemme 18, ist vorzugsweise mit der Fahrzeugmasse verbunden. Zwischen den Ausgangsklemmen A und B liegt ein elektrisch ansteuerbarer Schalter 12, dessen eine Schaltstrecke 13 über einen Lastwiderstand 11 vom Widerstandswert $R_L$ mit der Ausgangsklemme A verbunden ist, und dessen andere Schaltstrecke 14 mit dem einen Eingang des Verstärkers 16 und mit der Fahrzeugmasse verbunden ist. Der Ausgang des Verstärkers 16, der vorzugsweise durch eine Starke Gegenkopplung nur geringe, aber fast konstante Verstärkung aufweist, ist auf einen Analog/Digital-(A/D-)Eingangskanal 20 einer Eingangs/Ausgangs-(I/O-)Schnittstelle 21 eines Mikrorechners 22 geführt; die große I/O-Schnittstelle 21 weist im allgemeinen noch weitere A/D-Eingänge 23 auf. Ein Ausgangskanal 24 des Mikrorechners 22 ist mit der Steuerelektrode 15 des elektrischen Schalters 12 verbunden. Ein weiterer Ausgangskanal 26 ist mit einer entsprechenden Steuerelektrode 28 eines elektrischen Schalters 27 verbunden, dessen Schaltstrekke 29 und 30 mit dem Heizelement 10c in Serie geschaltet und an eine Versorgungsspannung 31 angelegt sind. Wenn das Heizelement fehlt, fehlen auch die anderen soeben genannten Schaltungsteile. Die I/O-Schnittstelle 21 des Mikrorechners 22 weist in der Regel noch weitere Verbindungen 25 zum Ansteuern von Verbrauchern auf.

Die Sondenspannung U$_S$ wird nun regelmäßig in kurzer zeitlicher Abfolge, in praxi etwa alle 10 ms abgetastet, d. h. über den A/D-Eingangskanal 20 in den Mikrorechner 22 eingelesen und dort weiterverarbeitet und ausgewertet. Die sich daraus beispielhaft ergebende Abtastfrequenz in der Größenordnung von 100 Hz gewährleistet sowohl eine noch ausreichende Zeitauflösung des Signals der Lambdasonde als auch eine noch ausreichende Grenzfrequenz eines entsprechend ausgelegten Abgasregelkreises, falls das Sondensignal zu einer solchen Regelung dient. Um die Dynamik eines darin enthaltenen Reglers nicht merklich zu verschlechtern, findet die "Testbelastung" der Lambdasonde mit dem Lastwiderstand R$_L$ während eines Zeitintervalls zwischen zwei aufeinanderfolgenden der vorerwähnten regelmäßigen Abtastzeitpunkte statt, d. h. während einer Dauer < 10 ms, z.B. 5 ms. Um Memory-Effekte (temperaturabhängige Verfälschung der Sondencharakteristik durch eine vorausgegangene hohe Strombelastung) der verwendeten Lambdasonde nicht in störendem Maße wirksam werden zu lassen, ist der zeitliche Abstand zwischen den einzelnen Testbelastungen der Lambdasonde erheblich größer, beispielhaft in der Größenordnung 1 s gewählt, woraus sich dann eine Wiederholfrequenz besagter Testbelastungen von 1/2 Hz ergibt. Es stellt sich damit beispielhaft ein Belastungsverhältnis von > 1/200 ein und demgemäß ein wünschenswert geringer Durchschnittswert des der Sonde entnommenen Stromes, so daß deren Stromalterung gering bleibt.

Das Bestimmen des temperaturveränderlichen Innenwiderstandes R$_i$ der Lambdasonde geschieht nun derart, daß zwei im Abstand zweier regelmäßiger Abtastzeitpunkte, also beispielhaft im Abstand von 10 ms erfaßte Spannungen U$_L$ und U$_S$ gemäß folgender Formel per Rechnerprogramm verknüpft werden:

$$R_i = R_L(U_S - U_L)/U_L \quad (1)$$

Dabei werden die Sondenspannung U$_L$ unter Belastung und die unmittelbar darauffolgend gemessene Leerlaufspannung U$_S$ näherungsweise als "gleichzeitig" betrachtet, was aufgrund der gegenüber der regelmäßigen Abtastperiodendauer wesentlich größeren thermischen Zeitkonstanten der Lambdasonde zulässig ist.

Der errechnete Sondeninnenwiderstand R$_i$ dient als Parameter in einem Kennlinienfeld, in dem Lambdawerte abhängig von der gemessenen unbelasteten Sondenspannung U$_S$ abgelegt sind. Ein solches Lambda-Kennfeld ist in Fig. 2 schematisch dargestellt. Liegt der gemessene Innenwiderstand zwischen zwei abgespeicherten Kennlinien, findet eine Interpolation statt. Diese wird periodisch während jeder Abtastperiode zwischen zwei regelmäßigen Erfassungen der unbelasteten Sondenspannung U$_S$ durchgeführt, und zwar jeweils mit dem zuletzt ermittelten Innenwiderstandswert als ins Kennfeld eingegebene Korrekturgröße bis zur jeweils nächsten, beispielhaft nach spätestens 1 s erneut stattgefundenen Ermittlung des dann aktuellen Sondeninnenwiderstandes als neuer Kennfeldeingangskorrekturgröße. Durch diese Maßnahme wird erreicht, daß der Mikrorechner als wesentlicher Bestandteil eines entsprechenden Abgasregelkreises durch die Stützstellenerfassung zur Aktualisierung des Innenwiderstandes und damit der Korrektur der Sondenspannung nur geringfügig belastet wird, und dennoch ein an die thermische Zeitkonstante der Lambdasonde angepaßtes, hinreichend schnelles Aktualisieren der Sondencharakteristik in Bezug auf einen einzuregelnden Lambda-Wert des Abgases erfolgt.

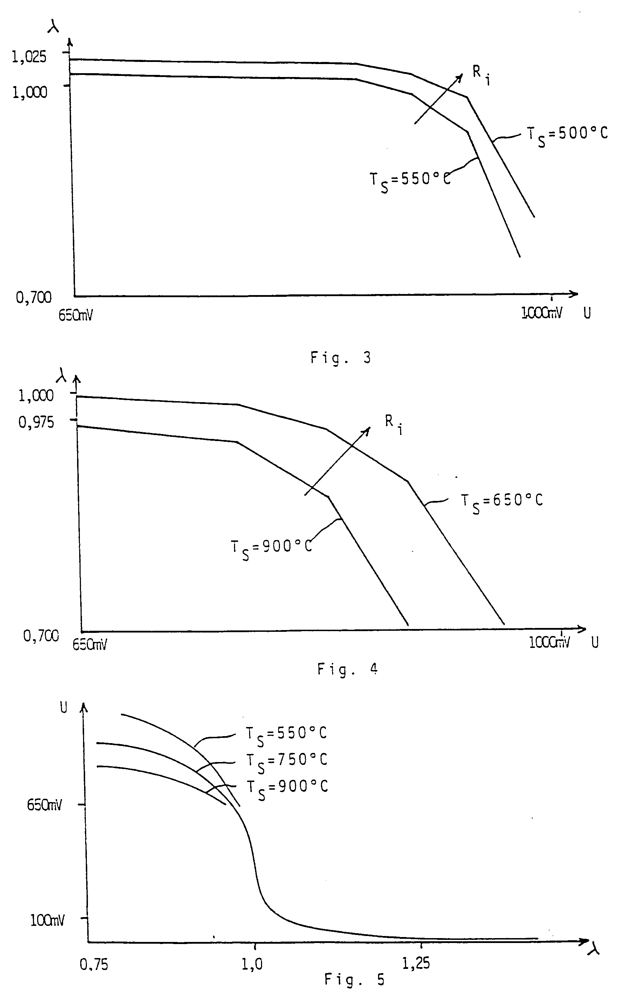

Während Fig. 2 eine schematische Kennfelddarstellung für den gesamten Lambdabereich ist, stellen die Fig. 3 und 4 konkrete Kennfelddiagramme für den fetten Lambdabereich für zwei unterschiedliche Temperaturbereiche dar. Wie aus Fig. 3 erkennbar, ändern sich bei niedrigen Temperaturen, d. h. im dargestellten Fall bei Temperaturen zwischen 500 °C und 550 °C, die Lambdawerte nur wenig in Abhängigkeit vom Innenwiderstand. Bei den hohen Temperaturen gemäß dem Diagramm von Fig. 4, d. h. im Beispielsfall bei Temperaturen zwischen 650 °C und 900 °C sind die Schwankungen dagegen erheblich. So entspricht eine bei unbelasteter Sonde gemessene Spannung U$_S$ von 860 mV bei 900 °C einem Lambdawert von etwa 0,75, während sie bei 650 °C Sondentemperatur etwa einem Lambdawert von 0,95 entspricht. Dies macht deutlich, daß es das dargestellte Verfahren nicht nur ermöglicht, bereits bei niedrigen Temperaturen zuverlässige Lambdawerte zu ermitteln, sondern daß es auch dazu in der Lage ist, genaue Meßergebnisse in einem Temperaturbereich zu liefern, in dem auch nach herkömmlichen Vorstellungen Sondenbereitschaft bestand. Das Verfahren ermöglicht es somit, stetige Regelung auch im fetten Bereich auszuführen, z. B. zur Warmlauf- oder Vollastregelung. Außerdem kann die beschriebene Lambdaerfassung mit Vorteil bei einem Lambda-Meßgerät verwendet werden.

Es wird darauf hingewiesen, daß in den Fig. 3 und 4 nur jeweils zwei Kennlinien für unterschiedliche Innenwiderstände aufgetragen sind. In der Praxis wird man vor allem im höheren Temperaturbereich, in dem die Variation groß ist, mehr Kennlinien verwenden, um Interpolationsfehler nicht zu groß werden zu lassen. Auch wird man möglichst viele Stützstellen entlang der Abszisse verwenden. Die Grenzen für die Zahl der Stützstellen und die Zahl der Kennlinien pro Kennfeld sind durch die Kapazität des verwendeten Kennfeldspeichers gegeben.

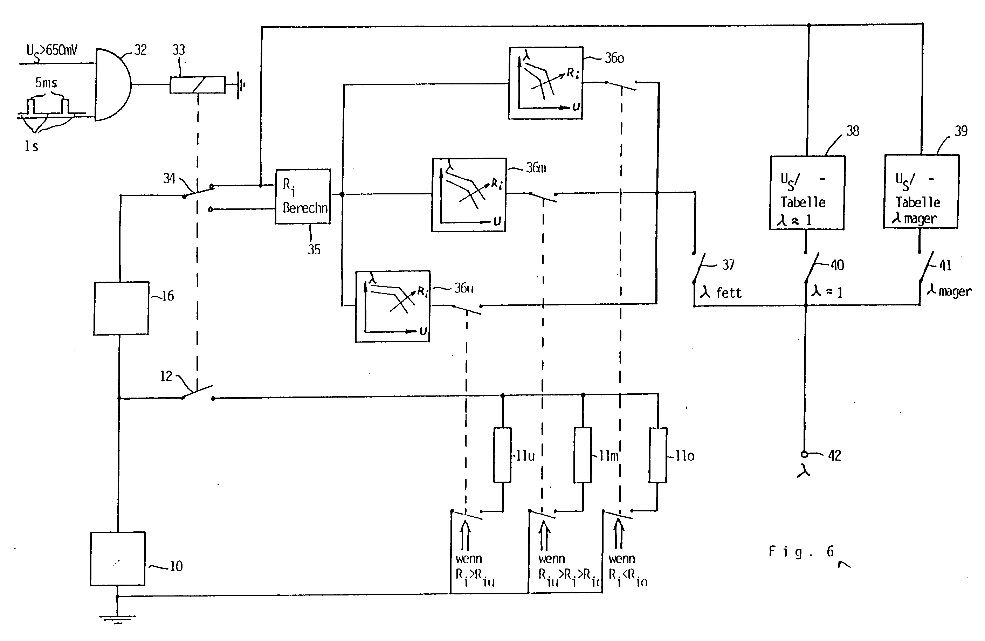

In Fig. 5 sind Sondenkennlinien für verschiedene Sondentemperaturen eingezeichnet. In der Darstellung laufen die Lambdawerte auf der Abszisse und die Spannungswerte der unbelasteten Sonde auf der Ordinate, also genau vertauscht gegenüber den Darstellungen gemäß den Fig. 2 - 4. Die Kennlinien sind in drei Bereiche untergliedert, und zwar in einen oberen Spannungsbereich oberhalb etwa 650 mV für fette Lambdawerte, einen unteren Bereich unterhalb etwa 100 mV für magere Lambdawerte und einen dazwischen liegenden Bereich zur Regelung auf Lambda = 1. Im unteren und im mittleren Bereich besteht nur geringe Temperaturabhängigkeit der Kennlinien, weswegen diese durch jeweils eine einzige Kennlinie im jeweiligen Bereich vertreten werden. Im oberen Bereich werden dagegen die zuvor beschriebenen Kennfelder für unterschiedliche Temperaturbereiche verwendet.

Ein Funktionsbild für eine erfindungsgemäße Erfassungseinrichtung für Lambdawerte, die eine Kennlinienaufteilung gemäß Fig. 5 verwendet, ist in Fig. 6 dargestellt und wird im folgenden erläutert.

Die in Fig. 6 enthaltene Sonde 10 ist wahlweise mit einem von drei Lastwiderständen 11o, 11m oder 11u belastbar, abhängig davon, ob der Innenwiderstand $R_i$ einen Wert $R_{io}$ für einen oberen Temperaturbereich, $R_{im}$ für einen mittleren Temperaturbereich bzw. $R_{iu}$ für einen unteren Temperaturbereich aufweist Die Lastwiderstände im Ausführungsbeispiel haben Widerstände von 500 Ohm, 2000 Ohm bzw. 5000 Ohm für den oberen, mittleren bzw. unteren Temperaturbereich. Diese Widerstände werden jedoch nur dann der Lambdasonde 10 zugeschaltet, wenn die Sondenspannung im oberen Bereich der Kennlinie gemäß Fig. 5 liegt, also höher als 650 mV ist. Diese Bedingung ist in Fig. 6 als Eingangsbedingung an einem Und-Glied 32 dargestellt. Dem anderen Eingangs des Und-Gliedes wird eine Taktspannung zugeführt, die durch ein Signal gegeben ist, das während 5 ms hohen Pegel und dann für 1 s niedrigen Pegel aufweist. Der Schalter 12 zum Zuschalten der Lastwiderstände wird demgemäß dann, wenn die Sondenspannung oberhalb 650 mV liegt, alle 1 s für 5 ms durch eine Schalteransteuerung 33 geschlossen. Wie bereits anhand von Fig. 1 erläutert, ist die Schalteransteuerung Teil des Mikrorechners 22.

Die an der Sonde 10 abgegriffene Spannung wird durch den Verstärker 16 verstärkt und über einen Spannungsschalter 34 an ein Berechnungsmittel 35 geliefert. Der Spannungsschalter 34 wird zusammen mit dem Lastwiderstandsschalter 12 geschaltet. Bei zugeschalteter Last erhält das Berechnungsmittel 35 demgemäß die unter Belastung ermittelte Spannung $U_L$, während es ansonsten die Spannung $U_S$ der unbelasteten Sonden enthält. Es errechnet aus diesen Werten gemäß der oben erläuterten Gleichung (1) den Innenwiderstand $R_i$ der Sonde. Abhängig vom Wert des Innenwiderstandes wird, wie bereits oben erläutert, einer der Lastwiderstände 11o, 11m oder 11u der Sonde 10 zugeschaltet. Ebenfalls abhängig vom genannten Wert wird eines von drei Kennfeldern auf einen Fett-Schalter 37 geschaltet. Die drei Kennfelder 36o, 36m und 36u entsprechen wiederum oberem, mittlerem und unterem Temperaturbereich. Das Kennfeld 36u entspricht also dem Kennfeld gemäß Fig. 3, während das Kennfeld 36o dem Kennfeld von Fig. 4 entspricht.

Die Spannung $U_S$ der unbelasteten Sonde wird nicht nur dem Berechnungsmittel 35 und den Kennfeldern 36.i zugeführt, sondern auch einer Linearisierungstabelle 38 für Lambda = 1 und einer Mager-Linearisierungstabelle 39. Diese Tabellen nehmen die anhand von Fig. 5 erläuterten Linearisierungen vor. Ihre Ausgangswerte werden auf einen Schalter 40 für Werte um Lambda = 1 bzw. auf einen Mager-Schalter 41 gegeben. Der Fett-Schalter 37, der Schalter 40 für Werte von Lambda etwa 1 und der Mager-Schalter 41 sind mit dem Ausgang 42 der Vorrichtung zur Lambdawerterfassung gemäß Fig. 6 verbunden. Welcher der drei Schalter geschlossen wird, hängt vom Spannungswert $U_S$ der unbelasteten Sonde ab. Bei Spannungen über 650 mV wird der Fett-Schalter 37, bei Spannungen unter 100 mV der Mager-Schalter 41 und bei Spannungen dazwischen der Schalter 40 für Werte um Lambda = 1 geschlossen.

Die Vorrichtung gibt somit bei Spannungen unter 100 mV Lambdawerte aus der Mager-Linearisierungstabelle 39 aus, dagegen bei Spannungen zwischen 100 mV und 650 mV Lambdawerte aus der Linearisierungstabelle 38 für Lambda = 1 und für Spannungen oberhalb von 650 mV Werte aus den Kennfeldern 36.i, abhängig davon, welcher Temperaturbereich, d. h. welcher Innenwiderstandsbereich gerade vorliegt.

Die Funktionsblöcke der Vorrichtung gemäß Fig. 6 sind soweit wie möglich in den Mikrorechner 22 gemäß Fig. 1 integriert.

Wie oben erläutert, wird die Sonde nur alle 1 s für jeweils 5 ms belastet. Die unbelastete Sonde wird dagegen alle 10 ms abgetastet. Dies bedeutet, daß sich die Sondenspannung nach der Belastung relativ schnell erholen muß, damit für das nächste Abtasten der Spannung der unbelasteten Sonde der gemessene Wert nicht durch die vorhergehende Belastung noch verfälscht ist. Das Erfordernis des schnellen Erholens wird dadurch ermöglicht, daß für verschiedene Innenwiderstandsbereiche unterschiedliche Lastwiderstände gewählt sind, und zwar umso höhere Lastwiderstände je höher der Innenwiderstand ist. Die Anzahl der anzuwendenden Lastwiderstandsbereiche hängt also von der Erholgeschwindigkeit der Sonde und der Abtastgeschwindigkeit ab. Es können demgemäß auch mehr oder weniger Bereiche als im Ausführungsbeispiel, also mehr oder weniger als drei Bereiche, verwendet werden.

Die Innenwiderstandsberechnung muß nicht notwendigerweise nach der oben angegebenen Gleichung (1) erfolgen, sondern sie hängt von der Beschaltung der Sonde ab. So kann die Innenwiderstandsbestimmung mit beliebigen Last-Netzwerken erfolgen, z. B. mit solchen, wie sie in EP 0 258 543 A2 beschrieben sind.

Beim Ausführungsbeispiel wird eine Lambdawerterfassung unter Berücksichtigung des Sonden-Innenwiderstandes nur für den Bereich fetter Lambdawerte durchgeführt. Dies hängt mit dem verwendeten Sondentyp zusammen, der im mageren Bereich nur geringe Temperaturabhängigkeit aufweist. Wie bereits oben erwähnt, kann das beschriebene Verfahren jedoch in allen Meßbereichen angewandt werden.

Von großem Vorteil beim beschriebenen Ausführungsbeispiel ist der einfache Aufbau, der neben dem ohnehin vorhandenen Mikrorechner lediglich den Lastwiderstand 11 und den Schalter 12 benötigt, um den Innenwiderstand bestimmen zu können.

**Patentansprüche**

1. Verfahren zur Lambdawerterfassung mit den Schritten
   - taktweises Belasten einer Lambdasonde mit einem Lastwiderstand RL,
   - taktweises Erfassen der Spannung US der Lambdasonde im unbelasteten und der Spannung UL der Lambdasonde im belasteten Zustand,
   - taktweises Bestimmen des Innenwiderstandes Ri der Lambdasonde aus dem Wert RL des Lastwiderstandes und aus den Spannungswerten US und UL der unbelasteten und der belasteten Lambdasonde,
   - Adressieren eines Kennfeldes zur Speicherung von Lambdawerten als Funktion der Spannung US der unbelasteten Lambdasonde und des Innenwiderstandes Ri der Lambdasonde mit den Werten US und Ri und Auslesen eines entsprechenden Lambdawerts,
dadurch gekennzeichnet,
   - daß der Wert RL des Lastwiderstandes abhängig vom Wert Ri des Innenwiderstandes verändert wird, wobei er mit dem bei steigender Temperatur abnehmenden Innenwiderstand Ri der Lambdasonde verringert wird.

2. Verfahren nach Anspruch 1, dadurch gekennzeichnet, daß zur Verringerung des Lastwiderstandes die Lambdasonde bei abnehmendem Innenwiderstand mit verschiedenen Lastwiderständen belastet wird, die vorbestimmte abgestuft verringerte Widerstandswerte aufweisen.

3. Verfahren nach Anspruch 1 oder 2, dadurch gekennzeichnet, daß der jeweilige Wert des Lastwiderstands so gewählt wird, daß sich die Spannung der wieder unbelasteten Lambdasonde bis zum nächsten Abtasten wieder weitgehend erholt.

4. Verfahren nach wenigstens einem der vorhergehenden Ansprüche, dadurch gekennzeichnet, daß es zur Lambdawerterfassung für eine Lambdaregelung, insbesondere für eine Lambdaregelung im fetten Lambdabereich verwendet wird.

5. Anwendung des Verfahrens gemäß einem der Ansprüche 1 - 6, dadurch gekennzeichnet, daß es zur Lambdawerterfassung für ein Lambdaanzeigegerät, insbesondere für die Anzeige im fetten Bereich verwendet wird.

6. Anwendung des Verfahrens nach einem der Ansprüche 7 oder 8, dadurch gekennzeichnet, daß im Lambdabereich um 1 und/oder im mageren Lambdabereich die Lambdawerterfassung durch lineares Umwandeln der jeweils gemessenen Sondenspannung US in einen Lambdawert erfolgt.

7. Vorrichtung zur Lambdawerterfassung, mit Mitteln zum taktweisen Belasten einer Lambdasonde mit einem Lastwiderstand RL, mit Mitteln (16) zum taktweisen Erfassen der Spannung US der unbelasteten Sonde und der Spannung UL der belasteten Sonde, mit Mitteln (11, 12, 16, 22) zum taktweisen Bestimmen des Innenwiderstands Ri der Sonde (10) aus dem Wert RL des Lastwiderstandes und aus den Spannungswerten US und UL der unbelasteten und der belasteten Lambdasonde, mit Mitteln (22), in denen ein Lambdawert-US-Ri-Kennfeld zum Bestimmen des Lambdawertes aus der gemessenen Spannung US der unbelasteten Sonde und dem bestimmten Innenwiderstand Ri abgespeichert ist, mit Mitteln (22), die den Lambdawert aus der Spannung US der unbelasteten Sonde unter Berücksichtigung des Innenwiderstandes Ri aus dem Kennfeld bestimmen sowie mit Mitteln (11u, 11m, 11o) zur Veränderung des Lastwiderstands in Abhängigkeit vom Innenwiderstand, wobei der Lastwiderstand mit dem bei steigender Temperatur abnehmendem Innenwiderstand verringert wird.

## Claims

1. Process for lambda value detection, comprising the steps
   - cylical loading of a lambda probe with a load resistance RL,
   - cyclical detection of the voltage US of the lambda probe in the unloaded state and of the voltage UL of the lambda probe in the loaded state,
   - cyclical determination of the internal resistance Ri of the lambda probe from the value RL of the load resistance and from the voltage values US and UL of the unloaded and loaded lambda probe respectively,
   - addressing of a characteristic map to store lambda values as a function of the voltage US of the unloaded lambda probe and of the internal resistance Ri of the lambda probe with the values US and Ri and reading out of a corresponding lambda value,
   characterised in that
   - the value RL of the load resistance is modified as a function of the value Ri of the internal resistance, it being reduced as the internal resistance Ri of the lambda probe decreases with increasing temperature.

2. Process according to Claim 1, characterised in that, in order to reduce the load resistance, the lambda probe is loaded with different load resistances with decreasing internal resistance, the said load resistance having predetermined resistance values which are reduced in steps.

3. Process according to Claim 1 or 2, characterised in that the respective value of the load resistance is chosen such that the voltage of the again unloaded lambda probe substantially recovers by the time of the next sampling.

4. Process according to at least one of the preceding claims, characterised in that it is used for lambda value detection for a lambda control, in particular for a lambda control in the rich lambda range.

5. Use of the process according to one of Claims 1 - 6,
   characterised in that it is used for lambda value detection for a lambda indicating device, in particular for the indication in the rich range.

6. Use of the process according to one of Claims 7 or 8,
   characterised in that, in the lambda range around 1 and/or in the lean lambda range, the lambda value detection is performed by linear conversion of the respectively measured probe voltage US into a lambda value.

7. Apparatus for lambda value detection, having means for cyclically loading a lambda probe with a load resistance RL, means (16) for cyclically detecting the voltage US of the unloaded probe, and of the voltage UL of the loaded probe, means (11, 12, 16, 22) for cyclically determining the internal resistance Ri of the probe (10) from the value RL of the load resistance and from the voltage values US and UL of the unloaded and loaded lambda probe respectively, means (22) in which a lambda value/US/Ri characteristic map is stored for determining the lambda value from the measured voltage US of the unloaded probe and from the determined internal resistance Ri, means (22) which determine the lambda value from the voltage US of the unloaded probe, making allowance for the internal resistance Ri from the characteristic map, and means (11u, 11m, 11o) for modifying the load resistance as a function of the internal resistance, the load resistance being reduced as the internal resistance decreases with increasing temperature.

## Revendications

1. Procédé de saisie de la valeur lambda avec les étapes suivantes :
   - charge périodique d'une sonde lambda par une résistance de charge RL,
   - saisie périodique de la tension US de la sonde lambda à l'état non chargé et de la tension UL de la sonde lambda à l'état chargé,
   - détermination périodique de la résistance interne Ri de la sonde lambda à partir de la valeur RL de la résistance de charge et des valeurs de tension US et UL de la sonde lambda à l'état non chargé et chargé,

- adressage d'un champ de caractéristiques pour enregistrer des valeurs lambda en fonction de la tension US de la sonde lambda non chargée et de la résistance interne Ri de la sonde lambda avec les valeurs US et Ri et lecture d'une valeur lambda correspondante,

caractérisé en ce que la valeur RL de la résistance de charge est modifiable en fonction de la valeur Ri de la résistance interne, elle diminue avec la résistance interne Ri de la sonde lambda qui diminue quand la température augmente.

2. Procédé selon la revendication 1, caractérisé en ce que pour diminuer la résistance de charge, on charge la sonde lambda quand la résistance interne diminue avec différentes résistances de charge, qui présentent des valeurs de résistance étagées en diminution et définies au préalable.

3. Procédé selon la revendication 1 ou 2 caractérisé en ce qu'on choisit chaque valeur de résistance de charge, de sorte que la tension de la sonde lambda à nouveau non chargée soit à nouveau largement rétablie lors de l'exploration suivante.

4. Procédé selon au moins l'une des revendications précédentes, caractérisé en ce qu'on l'utilise pour la saisie de valeur lambda pour une régulation lambda, notamment pour une régulation lambda dans le domaine lambda gras.

5. Utilisation du procédé selon l'une des revendications 1 à 6, caractérisée en ce qu'on l'utilise pour la saisie de la valeur lambda d'un appareil d'affichage lambda, notamment pour l'affichage dans le domaine gras.

6. Utilisation du procédé selon l'une des revendications 7 ou 8, caractérisée en ce que dans le domaine lambda voisin de 1 et/ou dans le domaine lambda maigre, la saisie de la valeur lambda se fait par transformation linéaire de chaque tension de sonde US mesurée en une valeur lambda.

7. Dispositif de saisie de valeur lambda avec des moyens pour charger périodiquement une sonde lambda avec une résistance de charge RL, avec des moyens (16) pour saisir périodiquement la tension US de la sonde non chargée et la tension UL de la sonde chargée, avec des moyens (11, 12, 16, 22) pour déterminer périodiquement la résistance interne Ri de la sonde (10) à partir de la valeur RL de la résistance de charge et à partir des valeurs de tension US et UL de la sonde lambda non chargée et chargée, avec des moyens (22), dans lesquels est enregistré un champ de caractéristiques de valeur lambda pour US-Ri pour déterminer la valeur lambda à partir de la tension mesurée US de la sonde non chargée et de la résistance interne Ri définie, avec des moyens (22), qui déterminent la valeur lambda à partir de la tension US de la sonde non chargée en tenant compte de la résistance interne Ri du champ de caractéristiques, ainsi qu'avec des moyens (11u, 11m, 11o) pour modifier la résistance de charge en fonction de la résistance interne, la résistance de charge étant diminuée quand la résistance interne diminue en fonction de la température croissante.

# FIG. 1

# FIG. 2

Fig. 3

Fig. 4

Fig. 5

$U_S > 650\,mV$

5ms

1s

32

33

34

$R_i$ Berechn

35

16

12

10

36o

$\lambda$ $R_i$ $U$

36m

$\lambda$ $R_i$ $U$

36u

$\lambda$ $R_i$ $U$

37
$\lambda$ fett

38
$U_S/$ - Tabelle $\lambda \approx 1$

39
$U_S/$ - Tabelle $\lambda$ mager

40
$\lambda \approx 1$

41
$\lambda$ mager

42
$\lambda$

11u    11m    11o

wenn $R_i > R_{iu}$

wenn $R_{iu} > R_i > R_{io}$

wenn $R_i < R_{io}$

Fig. 6

EP 0 377 600 B1

11